# EUROPEAN PATENT SPECIFICATION

(11) **EP 2 962 527 B1**
(45) Date of publication and mention of the grant of the patent: **21.06.2017**
(21) Application number: 14705793.9
(22) Date of filing: 24.02.2014
(51) Int. Cl.: H05B 6/06, H05B 6/12

(54) **AN INDUCTION COOKTOP AND THE CONTROL METHOD THEREOF**
INDUKTIONSKOCHFELD UND STEUERUNGSVERFAHREN DAFÜR
TABLE DE CUISSON À INDUCTION ET SON PROCÉDÉ DE COMMANDE

(30) Priority: 26.02.2013 TR 201302287
(43) Date of publication of application: 06.01.2016
(73) Proprietor: Arçelik Anonim Sirketi, 34950 Istanbul (TR)
(72) Inventor: DOGANAY, Serdar Gokhan, 34950 Istanbul (TR); AYTEKIN, Burcak, 34950 Istanbul (TR)
(86) International application number: PCT/EP2014/053518
(87) International publication number: WO 2014/131721

(56) References cited:
- EP-A1- 2 405 715
- EP-A2- 2 059 091
- EP-A2- 2 530 999
- FR-A1- 2 672 763
- US-A- 5 808 280

## Description

The present invention relates to an induction cooktop that is suitable for heating cooking vessels with different diameters.

White goods producers have designed a large number of different types of cooktops that can generate heat with electricity. Among these, the cooktops that provide the heating of the ferromagnetic based cooking vessels by induction method are widely preferred by users since they provide savings in electrical energy.

In induction cooktops, the cooking zone that is intended for the wide diameter cooking vessel is generally formed by a single coil and when small diameter cooking vessels are placed and heated on the cooking zone that is intended for the wide diameter cooking vessel, generally problems arise since the coil that forms the induction cooktop is designed so as to complete the electric circuit together with the ferromagnetic based cooking vessel. When the user places and tries to heat a small diameter cooking vessel on the cooking zone that is intended for the wide diameter cooking vessel, high currents pass through the coil and these high currents can permanently damage the operation of the induction cooktop. These malfunctions cause consumer complaints and increase the number of malfunctions reported to the related service departments.

In order to solve this problem, white goods producers form the wide diameter cooking zone with concentric induction coils that are disposed one within the other. These coils can be driven independently from one another. Thus, both large and small diameter cooking vessels are enabled to be heated on the same cooking zone.

White goods producers furthermore have designed induction cooktops that automatically detect the diameter of the cooking vessel placed on the burner when the cooking zone is operated by the user and drive the coils covered by the cooking vessel in order to provide convenience for the users.

In the state of the art United States Patent Application No. US2001/0025848A1, an induction heating device is explained that comprises a cooking area that is formed by more than one concentric coil that is suitable for heating cooking vessels with different diameters.

Document US5808280 discloses an induction heating device according to the state of the art.

The aim of the present invention is the realization of an induction cooktop, and the related control method, that allows to effectively determine the diameter of the cooking vessel placed on the cooking zone and the respective coils to be operated independently of the consumer, also allows to protect the cooktop against malfunctions and provide energy savings by not operating the coils forming the area of the cooking zone that are not covered by the cooking vessel.

The induction cooktop realized in order to attain the aim of the present invention and explicated in the attached claims is suitable for heating at least two cooking vessels with different diameters, and comprises at least one cooking zone having more than one concentric and nested area, a coil forming separately the areas of the cooking zone, more than one generator each separately driving the coil forming each area, a sensor unit providing the detection of the load of each coil separately when the cooking vessel is placed on the cooking zone and a control unit that first operates the generator corresponding to the outermost area when the cooking zone is operated by the user, drives the coil forming the outermost area by a signal, determines whether or not the cooking vessel placed on the cooking zone covers the outermost area with respect to the relation of the respective coil current and the drive signal detected by the sensor unit, and that provides the heating of the cooking vessel by making the generators drive the coils forming the outermost area and the inner areas when the cooking vessel placed on the cooking zone is detected to cover the outermost area, and that repeats the above steps for each of the inner areas respectively from the outside inwards until reaching the innermost area when the cooking vessel placed on the cooking zone is detected not to cover the outermost area.

When the cooking zone formed by concentric and nested coils is operated by the user, first the outermost coil is driven by a PWM signal and it is determined whether or not the cooking vessel covers the outer coil surface depending on the relation of the said signal with the coil current. If the base of the cooking vessel covers the outermost coil, both the inner and the outer coils are driven together by the frequency determined for the innermost coil. Thus, disturbing noises that may occur due to the drive frequency difference are prevented. If the base of the cooking vessel does not cover the outer coil, this time it is determined whether or not the next inner coil is covered by the cooking vessel by the same method. The process is continued until the innermost coil. By means of this method, if a cooking vessel is placed on the cooking zone so as to cover the outermost coil, the heating process can be started after a limited number of control steps. It is not necessary to control the inner coils one by one.

The induction cooktop automatically detects the cooking vessel and determines the suitable coil configuration to provide energy saving, thus enabling the desired power transfer to the cooking vessel.

By means of the algorithm of the present invention, energy saving is provided by not operating the coils that are not covered by the cooking vessel. Furthermore, by the multiple nested coil design, high currents that may permanently damage the system during the heating of the small diameter cooking vessel on the large diameter cooking zone are prevented. Additionally, consumer satisfaction is maintained as well by heating the small diameter cooking vessel on a large diameter cooking zone. Detection of the cooking vessel and driving of the coils are realized completely independently of the user.

The model embodiments related to the induction cooktop and the control method realized in order to attain the aim of the present invention are illustrated in the attached figures, where:
Figure 1 - shows an algorithm that the control unit executes in an embodiment of the present invention.
Figure 2 - is the schematic view of the generator, the rectifier and the induction coil circuits in an embodiment of the present invention.
Figure 3 - is the view of the inner and outer areas of the cooking zone in an embodiment of the present invention.

The elements illustrated in the figures are numbered as follows:
- 1.: First generator
- 2.: Second generator
- 3.: Inner coil
- 4.: Outer coil
- 5.: IGBT Transistor
- 6.: Diode
- 7.: Capacitor
- 8.: First IGBT drive
- 9.: Second IGBT drive
- 10.: PWM signal line
- 11.: Rectifier
- 12.: Mains inlet
- 13.: Cooking zone
- 14.: Inner area
- 15.: Outer area
- 16.: Induction cooktop

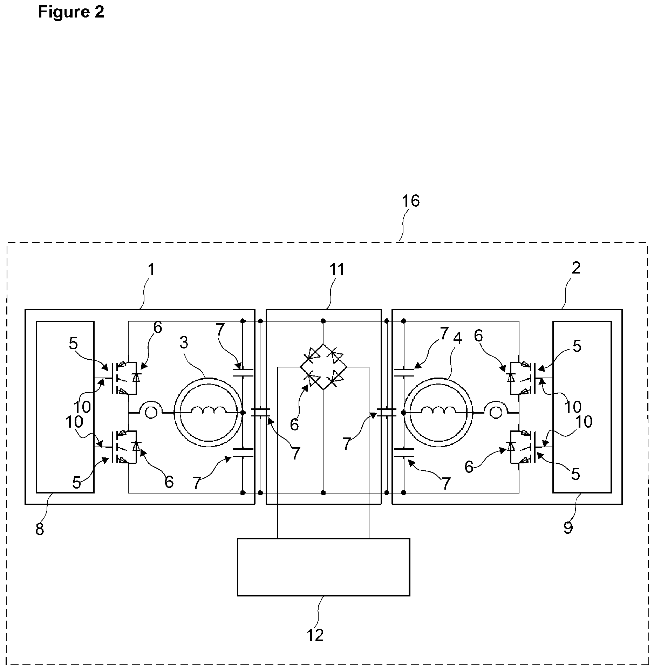

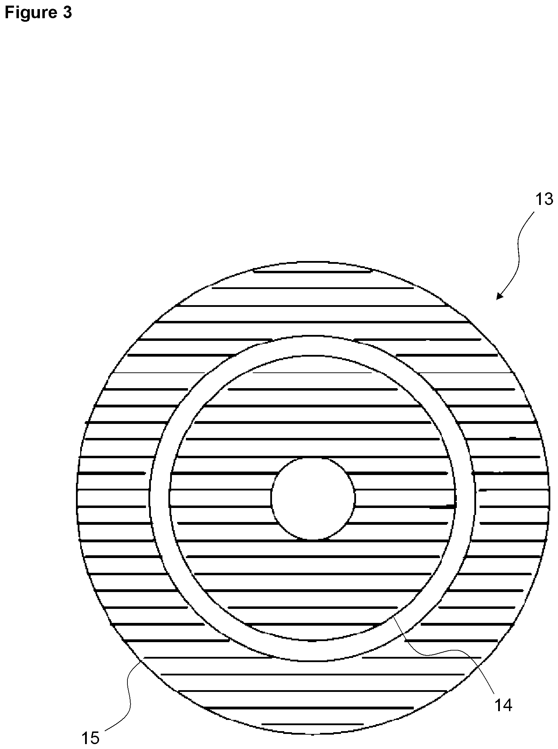

The induction cooktop (16) is suitable for heating at least two cooking vessels with different diameters and comprises:
- at least one cooking zone (13) having more than one concentric and nested area (14, 15), for example an inner area (14) and an outer area (15),
- more than one coil (3, 4) disposed one within the other that form the areas (14, 15) of the cooking zone (13), for example an inner coil (3) and an outer coil (4),
- more than one generator (1,2) enabling the inner and outer coils (3, 4) to be separately driven,
- a sensor unit that detects the electrical loads of the coils (3, 4) when the cooking vessel is placed on the cooking zone (13),
- a control unit
   • that first operates the generator (2) corresponding to the outermost area (15) when the cooking zone (13) is operated by the user and enables the coil (4) forming the outermost area (15) to be driven through a PWM (Power Width Modulation) signal line (10) with the drive signal,
   • that determines whether or not the cooking vessel placed on the cooking zone (13) covers the outermost area (15) depending on the relation of the respective coil (3, 4) current detected by the sensor unit and the drive signal,
   • that enables the generators (1, 2) to drive the coils (3, 4) forming the outermost area (15) and the inner areas (14) when the cooking vessel placed on the cooking zone (13) is determined to cover the outermost area (15),
   • that repeats the above steps for each one of the inner areas (14) from the outside inwards in that order until reaching the innermost area (14) when the cooking vessel placed on the cooking zone (13) is determined not to cover the outermost area (15) (Figure 2 and Figure 3).

Thus, when the user places a small diameter cooking vessel on a large diameter cooking zone (13) for heating, the diameter of the cooking vessel is enabled to be determined automatically and independently from the user with a limited number of control steps as possible and by consuming a lesser amount of electricity.

Each of the generators (1, 2) that provide the driving of the coils (3, 4) comprise two IGBT type transistors (5), two diodes (6) and two capacitors (7) (Figure 2). Furthermore, each generator (1, 2) comprises an IGBT drive (8, 9) that provides the driving of the IGBT transistors (5) (Figure 2). The IGBT drives (8, 9) produce drive signals through the PWM signal line (10) and drive the IGBT transistors (5) (Figure 2). The alternative current at the mains inlet (12) is delivered to the generators (1, 2) after being converted into direct current through a rectifier (11) (Figure 2).

In an embodiment of the present invention, the control unit,
- enables the sensor unit to separately detect the electrical load of the coils (3, 4) driven for heating the cooking vessel at following predetermined time intervals and/or conditions after the cooking zone (13) is operated by the user,
- determines whether or not the cooking vessel is changed or whether or not it is present on the cooking zone (13) depending on the detection results,
- continues the operation of the generators (1, 2) when the cooking vessel is determined not to be changed and
- determines which areas (14, 15) the cooking vessel placed on the cooking zone (13) covers depending on the detection of the sensor unit when the cooking vessel is detected to be changed and enables the generators (1, 2) to drive only the coils (3, 4) forming the areas (14, 15) covered by the cooking vessel (Figure 2 and Figure 3).

Thus, the coils (3, 4) are prevented from being damaged by excessive current in case the user, for example changes a large diameter cooking vessel with a small diameter cooking vessel or removes the cooking vessel from the cooking zone (13) while the induction cooktop (16) operates.

In an embodiment of the present invention, the control unit
- enables the coils (3, 4) forming the areas (14, 15) covered by the cooking vessel placed on the cooking zone (13) to be driven by the generators (1, 2) with drive signals of the same frequency (Figure 2). Thus, disturbing noises that may be generated due to the drive frequency difference are prevented.

In an embodiment of the present invention, the generators (1, 2) drive each coil (3, 4) with one PWM drive signal through the PWM signal line (10). The control unit furthermore
- enables the driving of the coils (3, 4) forming the areas (14, 15) detected to be covered by the cooking vessel placed on the cooking zone (13) by the generators (1, 2) with the drive signal depending on the input of the user and such that the coils (3, 4) transmit approximately the same amount of energy to the cooking vessel for every unit area (Figure 2).

Thus, the bases of the cooking vessels are enabled to be heated homogeneously.

In an embodiment of the present invention, the induction cooktop (16) comprises more than one coil (3, 4) disposed concentrically and one inside the other under the cooking zone (13) (Figure 3). Each coil (3, 4) forms a different area (14, 15) of the cooking zone (13) and is driven by a separate generator (1, 2). Thus, cooking vessels with different diameters are enabled to be heated. The coils (3, 4) have circular cross-sections.

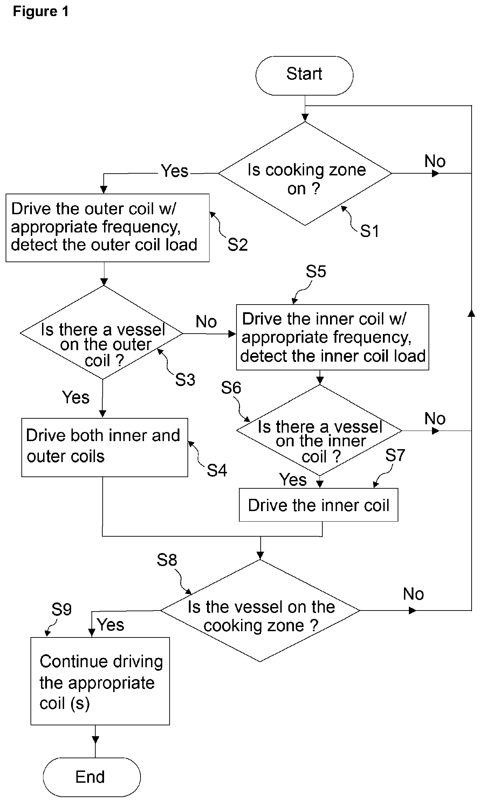

In an embodiment of the present invention, the algorithm executed by the control unit is shown in Figure 1.

In an embodiment of the present invention, the control method executed by the control unit of the induction cooktop (16) comprises the steps of:
- first operating the generator (2) corresponding to the outermost area (15) when the cooking zone (13) is operated by the user (S1) and driving the coil (4) forming the outermost area (15) with a drive signal through a PWM signal line (10) (S2),
- determining whether or not the cooking vessel placed on the cooking zone (13) covers the outermost area (15) depending on the relation of the respective coil current detected by the sensor unit and the drive signal (S2, S3),
- driving the coils (3, 4) forming the outermost area (15) and the inner areas (14) by the generators (1, 2) (S4) when the cooking vessel placed on the cooking zone (13) is determined to cover the outermost area (15) (S3),
- repeating the above steps for each of the inner areas (14) from the outside inwards in that order until reaching the innermost area (14) when the cooking vessel placed on the cooking zone (13) is determined not to cover the outermost area (15) (S3) (Figure 1).

In an embodiment of the present invention the control method executed by the control unit furthermore comprises the steps of:
- detecting the electrical load of the coils (3, 4) (S2, S5) driven for heating the cooking vessel separately by the sensor unit at following predetermined time intervals after the cooking zone (13) is operated by the user (S1),
- determining whether or not the cooking vessel is changed or whether or not it is present on the cooking zone (13) depending on the detection results (S3, S6, S8),
- continuing the operation of the generators (1, 2) (S9) when the cooking vessel is determined not to be changed (S3, S6, S8),
- when the cooking vessel is determined to be changed (S3, S6, S8), determining which areas (14, 15) are covered by the cooking vessel placed on the cooking zone (13) and driving only the coils (3, 4) forming the areas (14, 15) covered with the cooking vessel by the generators (1, 2) (S4, S7, S9) (Figure 1).

In an embodiment of the present invention, in the control method executed by the control unit furthermore,
- the coils (3, 4) are driven (S4, S7) with the drive signals of the same frequency in the step of driving the coils (3, 4) (S4, S7) forming the areas (14, 15) covered by the cooking vessel placed on the cooking zone (13) by the generators (1, 2) (Figure 1). Thus, the disturbing noises that may be generated due to the drive frequency difference are prevented.

In an embodiment of the present invention, in the control method executed by the control unit furthermore,
- the coils (3, 4) are driven (S4, S7) with the drive signal through the PWM signal line (10) by the generators (1, 2) depending on an input of the user and such that approximately the same amount of energy is transmitted to the cooking vessel for every unit area in the step of driving the coils (3, 4) (S4, S7) forming the areas (14, 15) covered by the cooking vessel placed on the cooking zone (13).

Thus, the cooking vessels are enabled to be heated at different temperatures depending on the input entered by the user from the control panel. Thus, the bases of the cooking vessels are enabled to be heated homogeneously.

The control program executed by the control unit of the induction cooktop (16) enables the induction cooktop (16) to realize all the steps as in any one of the above control methods.The recording medium in the control unit is a recording medium that is suitable to be read by a microprocessor and the control program of the present invention is recorded thereon.

## Claims

1. An induction cooktop (16) suitable for heating cooking vessels of at least two different diameters, comprising,
- at least one cooking zone (13) having more than one concentric and nested area (14, 15),
- more than one concentric inner and outer coil (3, 4) disposed one within the other, forming the areas (14,15) of the cooking zone (13),
- more than one generator (1,2) providing the driving of the inner and outer coils (3, 4) separately and
- a sensor unit that detects the electrical loads of the coils (3, 4) when the cooking vessel is placed on the cooking zone (13),
**characterized by** a control unit
- that first operates the generator (2) corresponding to the outermost area (15) when the cooking zone (13) is operated by the user and enables the coil (4) forming the outermost area (15) to be driven by the drive signal through a PWM signal line (10),
- that determines whether or not the cooking vessel placed on the cooking zone (13) covers the outermost area (15) depending on the relation of the respective coil current detected by the sensor unit and the drive signal,
- that provides the driving of the coils (3, 4) forming the outermost area (15) and the inner areas (14) by the generators (1, 2) when the cooking vessel placed on the cooking zone (13) is determined to cover the outermost area (15),
- that repeats the above steps for each of the inner areas (14) from the outside inwards in that order until reaching the innermost area (14) when the cooking vessel placed on the cooking zone (13) is determined not to cover the outermost area (15),
- that enables the generators (1, 2) to drive the coils (3, 4) forming the areas (14, 15) covered by the cooking vessel placed on the cooking zone (13) with signals of the same frequencies,
**wherein**
- the generators (1,2) provide the driving of each coil (3, 4) by a PWM drive signal, and
- the control unit that enables the coils (3, 4) covered by the cooking vessel placed on the cooking zone (13) to be driven by the generators (1, 2) depending on an input of the user with a PWM drive signal such that the coils (3,4) transmit approximately the same amount of energy to the cooking vessel for every unit area.

2. An induction cooktop (16) as in Claim 1, **characterized by** a control unit
- that enables the sensor unit to separately detect the electrical load of the coils (3, 4) driven at following predetermined time intervals after the cooking zone (13) is operated by the user,
- that determines whether or not the cooking vessel is changed or whether or not it is present on the cooking zone (13) depending on the detection results,
- that continues the operation of the generators (1, 2) when the cooking vessel is determined not to be changed,
- determines which areas (14, 15) are covered by the cooking vessel placed on the cooking zone (13) depending on the detection of the sensor unit when the cooking vessel is detected to be changed and enables the generators (1, 2) to drive only the coils (3, 4) forming the areas (14,15) covered by the cooking vessel.

3. A control method executed by the control unit of an induction cooktop (16) as in any one of the claims 1 to 2, comprising the steps of:
- first operating the generator (2) corresponding to the outermost area (15) when the cooking zone (13) is operated by the user (S1) and driving the coil (4) forming the outermost area (15) with a drive signal through a PWM signal line (10) (S2),
- determining whether or not the cooking vessel placed on the cooking zone (13) covers the outermost area (15) depending on the relation of the respective coil current detected by the sensor unit and the drive signal (S2, S3),
- driving the coils (3, 4) forming the outermost area (15) and the inner areas (14) by the generators (1,2) (S4) when the cooking vessel placed on the cooking zone (13) is determined to cover the outermost area (15) (S3),
- repeating the above steps for each of the inner areas (14) from the outside inwards in that order until reaching the innermost area (14) when the cooking vessel placed on the cooking zone (13) is determined not to cover the outermost area (15) (S3),
wherein
- the coils (3, 4) are driven with the drive signal of the same frequency in the steps wherein the coils (3, 4) covered by the cooking vessel placed on the cooking zone (13) are driven (S4, S7),
- the coils (3, 4) are driven depending on an input of the user with a drive signal such that the coils (3, 4) transmit approximately the same amount of energy to the cooking vessel for every unit area in the steps of driving the coils (3,4) covered by the cooking vessel placed on the cooking zone (13) (S4, S7).

4. A control method as in Claim 3, executed by the control unit and comprising the steps of:
- detecting the electrical load of the coils (3, 4) (S2, S5) driven for heating the cooking vessel by the sensor unit at following predetermined time intervals after the cooking zone (13) is operated by the user (S1),
- determining whether or not the cooking vessel is changed or whether or not it is present on the cooking zone (13) depending on the detection results (S3, S6,S8),
- continuing the operation of the generators (1,2) (S9) when the cooking vessel is determined not to be changed (S3, S6, S8),
- when the cooking vessel is detected to be changed (S3,S6, S8), determining which areas (14,15) are covered by the cooking vessel placed on the cooking zone (13) depending on the sensor unit and driving only the coils (3, 4) forming the areas (14, 15) covered by the cooking vessel (S4, S7, S9).

## Patentansprüche

1. Ein zum Erwärmen von mindestens zwei Kochgeschirren verschiedener Durchmessern geeignetes Induktionskochfeld (16), welches
- mindestens eine Kochzone (13) mit mehreren konzentrisch und ineinander geschachtelten Flächen (14,15),
- die Flächen (14,15) der Kochzone (13) bildende, ineinander geschachtelte mehrere konzentrisch angeordnete innere und äußere Spulen (3,4),
- mehrere Generator (1,2), die den einzelnen Antrieb der inneren und äußeren Spulen (3,4) gewährleisten und
- eine Sensoreinheit, die die elektrische Ladung der Spulen (3,4) erfasst, wenn das Kochgeschirr auf die Kochzone (13) gestellt wird, beinhaltet
**dadurch gekennzeichnet** eine Steuereinheit,
- die vorrangig den der äußeren Fläche (15) entsprechenden Generator (2) betätigt, wenn die Kochzone (13) vom Benutzer eingeschaltet wird und die Ansteuerung der Spule (4), die die äußere Fläche (15) darstellt, durch das Antriebssignal mittels der PWM Signalleitung (10) gewährleistet,
- die die Ausdeckung der äußeren Fläche (15) durch das auf die Kochzone (13) aufgesetzten Kochgeschirrs mit der Sensoreinheit und in Abhängigkeit der durch das Antriebssignal erfassten jeweiligen Spulenstrombeziehung bestimmt,
- die nach der Bestimmung der Ausdeckung der äußeren Fläche (15) durch das auf die Kochzone (13) aufgesetzten Kochgeschirrs den Antrieb der die äußere (15) und innere Flächen (14) darstellenden Spulen (3,4) durch die Generator (1,2) gewährleistet,
- die bei Feststellung, dass die äußere Fläche (15) durch das auf die Kochzone (13) aufgesetzten Kochgeschirrs nicht abgedeckt wird, bis zum Erreichen der inneren Fläche (14) von außen nach innen diese Reihenfolge verfolgend betreffend jeder der inneren Flächen (14) die oben aufgeführten Schritte wiederholt,
- die den Antrieb der Spulen (3,4), welche die durch das auf die Kochzone (13) aufgesetztes Kochgeschirr abgedeckten Flächen (14,15) darstellen, durch die Signale gleicher Frequenzen der Generator (1,2) gewährleistet,
**wobei hier**
- die Generatoren (1,2) sicherstellen, dass jede Spule (3,4) mittels einem PWM Antriebssignal angesteuert wird und
- die Steuereinheit hingegen das Einleiten der durch das auf die Kochzone (13) aufgesetztes Kochgeschirr abgedeckten Spulen (3,4) mit einem PWM Antriebssignal gewährleistet , so dass die Spulen (3,4) für jede Einheitsfläche dem Kochgeschirr annähernd die gleiche Menge an Energie senden, wodurch die Generatoren (1,2) in Abhängigkeit von einer Benutzereingabe angesteuert werden.

2. Ein Induktionskochfeld (16), nach Anspruch 1, **dadurch gekennzeichnet dass** eine Steuereinheit,
- welche die einzelne Erfassung der elektrischen Ladung der nach Einstellen der Kochzone (13) durch den Benutzer zu vorgegebenen Zeitintervallen angetriebenen Spulen (3,4) durch die Sensoreinheit gewährleistet,
- die Auswechslung des Kochgeschirrs oder dessen Vorhandensein auf der Kochzone (13) in Abhängigkeit der Erfassungsergebnisse bestimmt,
- nach Bestimmung, dass das Kochgeschirr nicht ausgewechselt wurde, den Betrieb der Generatoren (1,2) fortführt,
- bei Erfassung, dass das Kochgeschirr ausgewechselt wurde, in Abhängigkeit der Erfassung der Sensoreinheit bestimmt, welche Flächen (14,15) von dem auf die Kochzone (13) aufgesetzten Kochgeschirr abgedeckt werden und sicherstellt, dass die Generatoren (1,2) nur die Spulen (3,4), welche die von dem Kochgeschirr abgedeckten Flächen (14,15) darstellen, angesteuert werden.

3. Ein die nachfolgenden Schritte umfassendes Steuersystem der Steuereinheit eines Induktionskochfeldes (16) nach einem der Ansprüche 1 oder 2:
- zunächst die Aktivierung des der äußeren Flächen (15) entsprechenden Generators (2) nach Einschaltung der Kochzone (13) durch den Benutzer (S1) und die Ansteuerung der die äußere Fläche (15) darstellenden Spule (4) durch ein Antriebssignal mittels einer PWM Signalleitung (10) (S2),
- die Bestimmung der Abdeckung der äußeren Fläche (15) durch das auf die Kochzone (13) aufgesetzten Kochgeschirrs in Abhängigkeit der von der Sensoreinheit und dem Antriebssignal detektierten Beziehung des jeweiligen Spulenstroms (S2, S3),
- die Ansteuerung der die äußerste Fläche (15) und inneren Flächen (14) darstellenden Spulen (3,4) durch die Generatoren (1,2), nach der Bestimmung (S4), dass die äußere Fläche (15) durch das auf die Kochzone (13) aufgesetzte Kochgeschirr nicht abgedeckt wird (S3),
- die Wiederholung der vorgehenden Schritte, bis zum Erreichen der inneren Fläche (14) von außen nach innen diese Reihenfolge verfolgend betreffend jeder der inneren Flächen (14), bei Feststellung, dass die äußere Fläche (15) durch das auf die Kochzone (13) aufgesetzte Kochgeschirr nicht abgedeckt wird (S3),
dabei,
- werden die Spulen (3,4) durch ein Antriebssignal mit der gleichen Frequenz die gleichen Schritte wie die Spulen (3,4) angetrieben werden, die durch das auf die Kochzone (13) aufgesetzte Kochgeschirr abgedeckt werden, verfolgend, angetrieben (S4, S7),
- die Spulen (3,4) nach den Antriebsschritten der jeweiligen Spulen (3,4) die von dem auf die Kochzone (13) aufgesetztem Kochgeschirr abgedeckten Spulen (3,4) für jede Einheitsfläche dem Kochgeschirr annähernd die gleiche Menge an Energie sendend in Abhängigkeit von einer Benutzereingabe mit einem Antriebssignal angetrieben (S4, S7).

4. Ein durch die Steuereinheit durchgeführtes und die nachfolgenden Schritte umfassendes Steuersystem nach Anspruch 3:
- die Erfassung (S2,S5) der elektrischen Ladung der der Spulen (3,4) die nach Eistellen der Kochzone (13) durch den Benutzer (S1) für die Erwärmung des Kochgeschirrs zu vorgegebenen Zeitintervallen von der Sensoreinheit angetrieben werden,
- die Bestimmung der Auswechslung des Kochgeschirrs oder dessen Vorhandensein auf der Kochzone (13) in Abhängigkeit mit den Erfassungsergebnissen (S3, S6, S8),
- die Fortführung (S9) des Betriebes der Generatoren (1,2) nach Bestimmung, dass das Kochgeschirr nicht ausgewechselt wurde (S3, S6, S8),
- nach Erfassung (S3, S6, S8), dass das Kochgeschirr ausgewechselt wurde, die Bestimmung (S4, S7, S9) mittels der Erfassung der Sensoreinheit welche Flächen (14,15) von dem auf die Kochzone (13) aufgesetztem Kochgeschirr abgedeckt werden und der Ansteuerung nur der Spulen (3,4), welche die von dem Kochgeschirr abgedeckten Flächen (14,15).

## Revendications

1. Une table de cuisson à induction (16) adaptée pour chauffer des récipients de cuisson d'au moins deux diamètres différents, comprenant,
- au moins une zone de cuisson (13) comportant plus d'une zone concentrique et imbriquée (14, 15),
- plus d'une bobine intérieure et extérieure (3, 4) concentriques disposées l'une dans l'autre, formant les zones (14, 15) de la zone de cuisson (13),
- plus d'un générateur (1, 2) assurant l'entraînement des bobines intérieure et extérieure (3, 4) séparément et
- une unité de capteur qui détecte les charges électriques des bobines (3, 4) lorsque le récipient de cuisson est placé sur la zone de cuisson (13),
**caractérisé par** une unité de commande
- qui actionne d'abord le générateur (2) correspondant à la zone la plus à l'extérieur (15) lorsque la zone de cuisson (13) est actionnée par l'utilisateur et permet à la bobine (4) formant la zone la plus à l'extérieur (15) d'être entraînée par le signal de commande à travers une ligne de signal PWM (10),
- qui détermine si oui ou non le récipient de cuisson placé sur la zone de cuisson (13) recouvre la zone la plus à l'extérieur (15) en fonction de la relation du courant de bobine respectif détecté par l'unité de capteur et le signal de commande,
- qui assure l'entraînement des bobines (3, 4) formant la zone la plus à l'extérieur (15) et les zones intérieures (14) par les générateurs (1, 2) lorsque le récipient de cuisson placé sur la zone de cuisson (13) est déterminé pour recouvrer la zone la plus à l'extérieur (15),
- qui répète les étapes ci-dessus pour chacune des zones intérieures (14) de l'extérieur vers l'intérieur dans cet ordre jusqu'à atteindre la zone la plus à l'intérieur (14) lorsque le récipient de cuisson placé sur la zone de cuisson (13) est déterminé pour ne pas recouvrir la zone la plus à l'extérieur (15),
- qui permet aux générateurs (1, 2) d'entraîner les bobines (3, 4) formant les zones (14, 15) recouvertes par le récipient de cuisson placé sur la zone de cuisson (13) avec des signaux de même fréquence,
**dans lequel**
- les générateurs (1, 2) assurent l'entraînement de chaque bobine (3, 4) par un signal d'entraînement PWM, et
- l'unité de commande qui permet de commander les bobines (3, 4) recouvertes par le récipient de cuisson placé sur la zone de cuisson (13) à être entraînée par les générateurs (1, 2) en fonction d'une entrée de l'utilisateur avec un signal de commande PWM de sorte que les bobines (3, 4) transmettent approximativement la même quantité d'énergie au récipient de cuisson pour chaque zone unitaire.

2. Une table de cuisson à induction (16) selon la revendication 1, **caractérisée par** une unité de commande
- qui permet à l'unité de détection de détecter séparément la charge électrique des bobines (3, 4) entraînée à des intervalles de temps prédéterminés après que la zone de cuisson (13) est actionnée par l'utilisateur,
- qui détermine si le récipient de cuisson est ou non changé ou s'il est présent ou non sur la zone de cuisson (13) en fonction des résultats de détection,
- qui continue le fonctionnement des générateurs (1, 2) lorsque le récipient de cuisson est déterminé comme n'étant pas modifié,
- détermine quelles zones (14, 15) sont recouvertes par le récipient de cuisson placé sur la zone de cuisson (13) en fonction de la détection de l'unité de capteur lorsque le récipient de cuisson est détecté à changer et permet aux générateurs (1, 2) d'entraîner uniquement les bobines (3, 4) formant les zones (14, 15) recouvertes par le récipient de cuisson.

3. Un procédé de commande exécuté par l'unité de commande d'une table de cuisson à induction (16) selon l'une quelconque des revendications 1 à 2, comprenant les étapes consistant à:
- actionner d'abord le générateur (2) correspondant à la zone la plus à l'extérieur (15) lorsque la zone de cuisson (13) est actionnée par l'utilisateur (S1) et entraîner la bobine (4) formant la zone la plus à l'extérieur (15) avec un signal d'entraînement par une ligne de signal PWM (10) (S2),
- déterminer si le récipient de cuisson placé sur la zone de cuisson (13) recouvre ou non la zone la plus à l'extérieur (15) en fonction de la relation du courant de bobine respectif détecté par l'unité de capteur et le signal de commande (S2, S3)
- entraîner les bobines (3, 4) formant la zone la plus à l'extérieur (15) et les zones intérieures (14) par les générateurs (1,2) (S4) lorsque le récipient de cuisson placé sur la zone de cuisson (13) est déterminé pour recouvrir la zone la plus à l'extérieur (15) (S3),
- répéter les étapes ci-dessus pour chacune des zones intérieures (14) de l'extérieur vers l'intérieur dans cet ordre jusqu'à atteindre la zone la plus à l'intérieur (14) lorsque le récipient de cuisson placé sur la zone de cuisson (13) est déterminé pour ne pas recouvrir la zone la plus à l'extérieur (15) (S3),
dans lequel
- les bobines (3, 4) sont entraînées avec le signal de commande de même fréquence dans les étapes où les bobines (3, 4) recouvertes par le récipient de cuisson placé sur la zone de cuisson (13) sont entraînées (S4, S7),
- les bobines (3, 4) sont entraînées en fonction d'une entrée de l'utilisateur avec un signal de commande de sorte que les bobines (3, 4) transmettent approximativement la même quantité d'énergie au récipient de cuisson pour chaque zone unitaire dans les étapes d'entraînement des bobines (3,4) recouvertes par le récipient de cuisson placé sur la zone de cuisson (13) (S4, S7).

4. Un procédé de commande selon la revendication 3, exécuté par l'unité de commande et comprenant les étapes consistant à:
- détecter la charge électrique des bobines (3, 4) (S2, S5) entraînée pour chauffer le récipient de cuisson par l'unité de capteur à des intervalles de temps prédéterminés après que la zone de cuisson (13) est actionnée par l'utilisateur (S1),
- déterminer si le récipient de cuisson est changé ou non ou s'il est présent ou non sur la zone de cuisson (13) en fonction des résultats de détection (S3, S6, S8),
- continuer le fonctionnement des générateurs (1,2) (S9) lorsque le récipient de cuisson est déterminé comme n'étant pas modifié (S3, S6, S8),
- lorsque le récipient de cuisson est détecté comme étant modifié (S3, S6, S8), déterminer quelles zones (14, 15) sont recouvertes par le récipient de cuisson placé sur la zone de cuisson (13) en fonction de l'unité de capteur et entraîner uniquement les bobines (3, 4) formant les zones (14, 15) recouvertes par le récipient de cuisson (S4, S7, S9).
